# FASCICULE DE BREVET EUROPEEN

(11) **EP 3 802 660 B1**
(45) Date de publication et mention de la délivrance du brevet: **17.07.2024**
(21) Numéro de dépôt: 19737183.4
(22) Date de dépôt: 29.05.2019
(51) Int. Cl.: C08G 63/672, C08G 63/78, C08G 63/80

(54) **PROCÉDÉ DE CRISTALLISATION D'UN POLYESTER COMPRENANT AU MOINS UN MOTIF 1,4 : 3,6-DIANHYDROHEXITOL**
VERFAHREN ZUR KRISTALLISATION EINES POLYESTERS MIT MINDESTENS EINER 1,4; 3,6-DIANHYDROHEXITOL-EINHEIT
METHOD FOR CRYSTALLIZING A POLYESTER COMPRISING AT LEAST ONE 1.4;3.6-DIANHYDROHEXITOL UNIT

(30) Priorité: 31.05.2018 FR 1854738
(43) Date de publication de la demande: 14.04.2021
(73) Titulaire: ROQUETTE FRERES, 62136 Lestrem (FR)
(72) Inventeur: JACQUEL, Nicolas, 59130 LAMBERSART (FR); SAINT-LOUP, René, 59160 LOMME (FR); DAUSQUE, Audrey, 59116 HOUPLINES (FR); NAUDIN, Sébastien, 50200 Coutances (FR); DESCAMPS, Nicolas, 59262 Sainghin-En-Melantois (FR)
(74) Mandataire: Plasseraud IP
(86) Numéro de dépôt international: PCT/FR2019/051282
(87) Numéro de publication internationale: WO 2019/229394

(56) Documents cités:
- WO-A1-2018/024988
- WO-A1-2018/024995

## Description

### Domaine de l'invention

L'invention se rapporte au domaine des polymères et concerne tout particulièrement un procédé de cristallisation de polyester comprenant des motifs 1,4 : 3,6-dianhydrohexitol.

### Arrière-plan technologique de l'invention

Le polyéthylène téréphtalate (PET) est une matière plastique très répandue et les applications industrielles sont nombreuses. Toutefois, dans certaines conditions d'utilisation ou pour certaines applications spécifiques, ce polyester ne présente pas nécessairement toutes les propriétés requises. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques.

Pour des raisons essentiellement écologiques, les matières plastiques issues de la pétrochimie sont de moins en moins plébiscitées et de nouvelles solutions ont commencé à voir le jour.

Les sources renouvelables ont ainsi fait leur apparition dans les polyesters thermoplastiques et d'autres PET modifiés ont été développés en introduisant dans le polyester des motifs 1,4 : 3,6-dianhydrohexitol, notamment de l'isosorbide. Ces polyesters modifiés présentent des températures de transition vitreuse plus élevées que le PET classique (Tg=75-80°C) ou les PETg comprenant du CHDM (Tg=75-85°C) et donc des caractéristiques thermomécaniques améliorées. En comparaison la transition vitreuse des copolyesters du PET contenant de l'isosorbide peut aller jusqu'à 210°C. Les polyesters comprenant des motifs d'isosorbide sont des polyesters éligibles pour la fabrication de nombreux produits de spécialités.

Classiquement, les polyesters sont obtenus par voie fondue mais cette technique ne permet pas d'atteindre les hautes masses molaires (>16 000 g/mol) requises pour les applications nécessitant des propriétés mécaniques importantes ou des viscosités fondues élevées nécessaires à leur transformation.

Ainsi, des masses molaires plus élevées peuvent être obtenues par l'intermédiaire d'un procédé particulier, à savoir la post-condensation à l'état solide du polymère, et particulièrement, du polyester. A titre d'exemple, c'est généralement ce procédé qui est mis en oeuvre pour l'obtention des polyesters grade fibre ou grade bouteille. C'est-à-dire, des polyesters répondant aux critères qualitatifs imposés par les normes industrielles pour la fabrication de fibre ou de bouteille.

D'une manière générale, la post-condensation à l'état solide est réalisée en deux phases. Dans une première phase, les granulés de polyester sont cristallisés sous un flux d'azote ou sous vide à une température proche de la température optimale de cristallisation du polyester concerné. Les pressions ainsi mises en oeuvre sont inférieures à 10 mbar absolus, et généralement de l'ordre de 5 mbar absolus. L'intérêt de la cristallisation est d'éviter l'agglomération à haute température des granulés et de concentrer les extrémités des chaines dans les domaines amorphes.

Une fois cristallisés, les granulés sont ensuite chauffés dans une deuxième phase à plus haute température afin de réaliser la post-condensation à l'état solide proprement dite, généralement entre 5°C et 20°C en dessous de la température de fusion du polymère. Cette étape permet d'augmenter la masse molaire du polymère. Industriellement, la cristallisation et la post-condensation à l'état solide sont réalisées sous vide, qui est préféré à un flux d'azote plus coûteux. Comme précédemment mentionné, les pressions ainsi mises en oeuvre sont inférieures à 10 mbar absolus, et généralement voisines de 5 mbars absolus.

Pour la plupart des polyesters, dans ces conditions, l'étape de cristallisation ne présente pas de problème particulier. Cependant, la Demanderesse a constaté que les polyesters contenant des motifs 1,4 : 3,6-dianhydrohexitol, en particulier l'isosorbide, avaient tendance à s'expanser pendant l'étape de cristallisation. Pour l'homme du métier spécialiste des polymères, ce phénomène d'expansion est également connu sous le terme anglais de « pop-corning ».

Ce phénomène d'expansion des polyesters comprenant des motifs 1,4 : 3,6-dianhydrohexitol pose plusieurs problèmes. Premièrement, la formation de granulés expansés de polyesters conduit à l'obtention de sphères vides très fragiles qui se brisent sous agitation et provoquent ainsi la formation de fines particules non désirées. Deuxièmement, le phénomène d'expansion engendre la déstructuration macroscopique du polyester, ce qui entraine la création de granulés de polyester hétérogènes : ils présentent des morphologies non homogènes et sont susceptibles d'évoluer à des vitesses différentes, par exemple au cours d'une étape de post-condensation à l'état solide. Ceci entraine une hétérogénéité des masses molaires du polyester. Troisièmement la Demanderesse a également constaté une agglomération accrue sur ces granulés expansés, ce qui rend son dosage nettement plus complexe et moins précis.

Ainsi, il serait tout à fait avantageux de pouvoir limiter, ou même supprimer le phénomène d'expansion engendré par la cristallisation des polyesters comprenant des motifs 1,4 : 3,6-dianhydrohexitol.

Des recherches ont montré que peu de documents faisaient état des phénomènes d'expansion lors de la cristallisation. Toutefois, ce phénomène est connu depuis les années 1990 dans le cas du polynaphtalate d'éthylène (PEN).

Afin d'éliminer l'expansion, le document US 4 963 644 se rapportant à un procédé de cristallisation du polynaphtalate d'éthylène décrit l'utilisation d'un flux d'azote ou la mise en place d'un vide afin de réaliser une dévolatilisation entre la température de transition vitreuse et la température de ramollissement, c'est-à-dire lorsque le polymère n'est pas encore dans un état ramolli. Cependant, cette solution entraine une augmentation du temps de cristallisation, ce qui rend le procédé moins efficace et plus cher.

Le document US 5 663 290 décrit que le polynaphtalate d'éthylène peut être séché au préalable lors de la granulation afin de passer sous une teneur en eau limite à partir de laquelle apparait le phénomène d'expansion (4200 ppm dans le cas du PEN). La granulation est ainsi effectuée dans un granulateur sous eau, puis un flux de gaz inerte permet de sécher les granulés à température ambiante. Ces granulés obtenus sont ensuite ensachés sous vide afin d'éviter la reprise en eau de la matière. Cependant, cette solution nécessite de modifier le procédé de granulation, une quantité importante et couteuse de gaz inerte et complique le conditionnement et l'utilisation des granulés.

Le document US 5 744 578 décrit une cristallisation d'un prépolymère de PEN en présence d'un liquide ou d'un mélange de liquides pressurisant qui ne dégrade pas le polymère. Si le liquide n'a pas une pression de vapeur suffisante pour empêcher l'expansion des granulés, le milieu est pressurisé avec un gaz inerte. Cette méthode présente peu d'intérêt car elle nécessite une étape supplémentaire de séparation du polymère et du liquide.

Toutes ces solutions connues à ce jour concernent des homopolymères ou des copolymères de polynaphtalate d'éthylène et ne sont pas nécessairement satisfaisantes et transposables aux polyesters contenant des motifs 1,4 : 3,6-dianhydrohexitol.

Afin de limiter les phénomènes d'expansion des polyesters susceptibles d'être post-condensés, le document US 5 391 694 décrit la modification de la forme desdits granulés par l'utilisation de filières spéciales pour la granulation. En modifiant la morphologie des granulés, la diffusion de l'eau ou de l'air peut être accélérée lors de la cristallisation, tout comme celle des coproduits lors de la post-condensation, ce qui augmente la vitesse de PCS. Cette solution est relativement contraignante car elle nécessite l'installation d'une filière spéciale en amont du procédé, ce qui rend également le procédé plus coûteux. WO 2018/024988 A1 se rapporte à l'utilisation d'un polyester thermoplastique semi-cristallin comprenant au moins un motif 1 4 : 3,6-dianhydrohexitol pour la fabrication de corps creux bi-étirés. L'exemple 2 décrit la préparation d'un polyester thermoplastique semi-cristallin P2 et son utilisation pour la fabrication de bouteille. Ce polyester P2 a subi une étape d'augmentation de masse molaire par post condensation.

Ainsi, il existe toujours un besoin de développer de nouveaux procédés permettant de supprimer le phénomène d'expansion observé lors de la cristallisation des polyesters comprenant des motifs 1,4 : 3,6-dianhydrohexitol, lesdits procédés ne présentant pas les inconvénients des procédés de l'art antérieur.

Il est donc du mérite de la Demanderesse d'avoir mis au point, par l'intermédiaire de conditions particulières pendant l'étape de cristallisation, un procédé permettant de limiter, voire de supprimer, le phénomène d'expansion des polyesters comprenant des motifs 1,4 : 3,6-dianhydrohexitol, en particulier l'isosorbide, et de s'affranchir ainsi des problèmes qu'il engendre.

### Résumé de l'invention

L'invention concerne un procédé de cristallisation d'un polyester comprenant au moins un motif 1,4 : 3,6-dianhydrohexitol, et comprenant les étapes suivantes de :
- fourniture d'un polyester semi-cristallin comprenant au moins un motif 1,4 : 3,6-dianhydrohexitol,
- cristallisation dudit polyester,
ledit procédé étant caractérisé en ce que l'étape de cristallisation est réalisée à une pression comprise dans la plage allant de 600 à 800 mbar absolus et en ce qu'il comprend également une étape de séchage du polyester avant l'étape de cristallisation de manière à obtenir une teneur en eau du polyester inférieure à 0,1%.

Le procédé selon l'invention présente l'avantage de limiter, voire de supprimer le phénomène d'expansion observé lors de la cristallisation des polyesters comprenant au moins un motif 1,4 : 3,6-dianhydrohexitol. Ainsi, le procédé ne génère plus de granulés sous la forme de sphères fragiles qui se brisent et engendrent des particules fines, il ne conduit pas à la déstructuration macroscopique du polyester qui est à l'origine de granulés hétérogènes et enfin, en limitant la formation de ces granulés, il rend inopérant le phénomène d'agglomération indésirable desdits granulés..

### Description détaillée de l'invention

L'invention concerne un procédé de cristallisation d'un polyester comprenant au moins un motif 1,4 : 3,6-dianhydrohexitol, et comprenant les étapes suivantes de :
- fourniture d'un polyester semi-cristallin comprenant au moins un motif 1,4 : 3,6-dianhydrohexitol,
- cristallisation dudit polyester,
ledit procédé étant caractérisé en ce que l'étape de cristallisation est réalisée à une pression comprise dans la plage allant de 600 à 800 mbar absolus et en ce qu'il comprend également une étape de séchage du polyester avant l'étape de cristallisation de manière à obtenir une teneur en eau du polyester inférieure à 0,1%.

Le procédé selon l'invention permet ainsi d'obtenir un polyester cristallisé.

De manière surprenante, la Demanderesse a constaté que le phénomène d'expansion observé lors de la cristallisation des polyesters comprenant au moins un motif 1,4 : 3,6-dianhydrohexitol pouvait être fortement limité, voire complètement supprimé, lorsque des conditions particulières étaient mises en oeuvre pendant la cristallisation. En effet, lorsque la cristallisation est réalisée à une pression d'au moins 600 à 800 mbar absolus, le phénomène est fortement limité et se trouve être supprimé pour des pressions de 800 mbar absolus.

Les conditions identifiées par la Demanderesse permettent, comparativement aux solutions proposées par l'art antérieur dans le cas du polynaphtalate d'éthylène, d'obtenir un procédé moins coûteux et plus rapide pour cristalliser un polyester comprenant au moins un motif 1,4 : 3,6-dianhydrohexitol.

La première étape du procédé de cristallisation selon l'invention consiste donc à fournir un polyester semi-cristallin comprenant un motif 1,4 : 3,6-dianhydrohexitol.

Selon la présente invention, le motif 1,4 : 3,6-dianhydrohexitol du polyester peut être l'isosorbide, l'isomannide, l'isoidide, ou un de leurs mélanges. De préférence, le motif 1,4 : 3,6-dianhydrohexitol est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®} Isosorbide.

Le polyester fourni à cette première étape peut se présenter sous une forme classiquement utilisée par l'homme du métier, à savoir par exemple sous forme de granulés.

Selon un mode de réalisation particulier, le polyester mis en oeuvre dans le procédé de cristallisation selon l'invention est un polyester semi-cristallin thermoplastique comprenant :
- au moins un motif 1,4 : 3,6-dianhydrohexitol (A),
- au moins un motif diol (B), autre que le motif 1,4 : 3,6-dianhydrohexitol (A),
- au moins un motif acide dicarboxylique aromatique (C).

Selon ce mode de réalisation, le motif 1,4 : 3,6-dianhydrohexitol (A) est tel que défini précédemment.

Le motif diol (B) du polyester thermoplastique peut être un motif diol alicyclique, un motif diol aliphatique non cyclique ou un mélange d'un motif diol alicyclique et d'un motif diol aliphatique non cyclique.

Dans le cas d'un motif diol alicyclique, également appelé diol aliphatique et cyclique, il s'agit d'un motif différent du 1,4 : 3,6-dianhydrohexitol. Il peut ainsi s'agir d'un diol choisi dans le groupe comprenant le 1,4-cyclohexanedimethanol, le 1,2-cyclohexanedimethanol, le 1,3-cyclohexanedimethanol, le spiroglycol, le tricyclo[5.2.1.0^{2,6}]décane diméthanol (TCDDM), le 2,2,4,4-tétraméthyl-1,3-cyclobutandiol, le tétrahydrofuranedimethanol (THFDM), le furanediméthanol, le 1,2-cyclopentanediol, le 1,3-cyclopentanediol, le 1,2-cyclohexanediol, le dioxane glycol (DOG), les norbornane diols, les adamanthanediols, les pentacyclopentadecane diméthanols ou un mélange de ces diols. De préférence, le motif diol alicyclique est le 1 ,4-cyclohexanedimethanol. Le motif diol alicyclique (B) peut être dans la configuration cis, dans la configuration trans ou peut être un mélange de diols en configuration cis et trans.

Dans le cas d'un motif diol aliphatique non cyclique, il peut s'agir d'un diol aliphatique non cyclique linéaire ou ramifié, ledit diol aliphatique non cyclique pouvant également être saturé ou insaturé. Un diol aliphatique non cyclique linéaire saturé est par exemple l'éthylène glycol, le 1,3-propanediol, le 1,4-butanediol, le 1,5-pentanediol, le 1,6-hexanediol, le 1,8-octanediol et/ou le 1,10-decanediol. Un diol aliphatique non cyclique ramifié saturé est par exemple le 2-methyl-1,3-propanediol, le 2,2,4-trimethyl-1,3-pentanediol, le 2-ethyl-2-butyl-1,3-propanediol, le propylèneglycol et/ou le néopentylglycol. Un motif diol aliphatique insaturé est par exemple le cis-2-butene-1,4-diol. De préférence, le motif diol aliphatique non cyclique est l'éthylène glycol.

Le motif acide dicarboxylique aromatique (C) est choisi parmi les acides dicarboxyliques aromatiques connus de l'homme du métier. L'acide dicarboxylique aromatique peut être un dérivé des naphtalates, téréphtalates, furanoates, thiophène dicarboxylate, pyridine dicarboxyalte ou encore d'isophtalates ou leurs mélanges. Avantageusement, l'acide dicarboxylique aromatique est un dérivé des téréphtalates et de préférence, l'acide dicarboxylique aromatique est l'acide téréphtalique.

Les quantités en différents motifs pourront aisément être adaptées par l'homme du métier pour l'obtention d'un caractère semi-cristallin. Par exemple, un polyester thermoplastique semi-cristallin peut comprendre:
- une quantité molaire de motifs 1,4 : 3,6-dianhydrohexitol (A) allant de 1 à 15 % mol ;
- une quantité molaire de motifs diol alicyclique (B) autre que les motifs 1,4 : 3,6-dianhydrohexitol (A) allant de 30 à 54 % mol ;
- une quantité molaire de motifs acide téréphtalique (C) allant de 45 à 55 % mol.

Les quantités molaires étant exprimées par rapport quantité molaires totales dudit polyester.

Toujours selon ce mode de réalisation particulier, le ratio molaire motifs 1,4 : 3,6-dianhydrohexitol (A) / somme des motifs 1,4 : 3,6-dianhydrohexitol (A) et des motifs diols (B) autre que les motifs 1,4 : 3,6-dianhydrohexitol (A), soit (A)/[(A)+(B)], est d'au moins 0,01 et d'au plus 0,90. Avantageusement, ce ratio est d'au moins 0,05 et d'au plus 0,65.

Selon une première variante de ce mode de réalisation particulier, le motif diol (B) du polyester thermoplastique le polyester est un motif diol alicyclique choisi dans le groupe comprenant le 1,4-cyclohexanedimethanol, le 1,2-cyclohexanedimethanol, le 1,3-cyclohexanedimethanol ou un mélange de ces diols. De préférence, le motif diol alicyclique est le 1,4-cyclohexanedimethanol. Ainsi selon cette variante, le polyester est exempt d'éthylène glycol.

Selon une seconde variante de ce mode de réalisation particulier, le motif diol (B) du polyester thermoplastique le polyester est un diol aliphatique non cyclique linéaire saturé choisi dans le groupe comprenant l'éthylène glycol, le 1,3-propanediol, le 1,4-butanediol, le 1,5-pentanediol, le 1,6-hexanediol, le 1,8-octanediol et/ou le 1,10-decanediol. De préférence, le diol aliphatique non cyclique linéaire saturé est l'éthylène glycol.

La seconde étape du procédé consiste à cristalliser ledit polyester. La cristallisation est un phénomène par lequel un corps, en l'espèce le polyester, passe partiellement à l'état de cristal.

L'étape de cristallisation du polyester est obtenue par un chauffage à la température de cristallisation. Plus particulièrement, le polyester est chauffé progressivement suivant une rampe de température jusqu'à la température de cristallisation. Cette température est alors maintenue pendant un temps suffisant permettant sa cristallisation maximale.

La température de cristallisation est fonction de chaque polyester. Cependant, c'est une caractéristique connue et/ou mesurable par l'homme du métier. Ainsi, dans le procédé selon l'invention, la température mise en oeuvre pour la cristallisation du polyester est déterminée par l'homme du métier à partir d'études de calorimétries différentielles à balayage (DSC)
Classiquement, pour les polyesters comprenant un motif 1,4 : 3,6-dianhydrohexitol, l'étape de cristallisation est réalisée sous vide à une pression inférieure à 10 mbar absolus, comme par exemple 5 mbar absolus. Or, comme mentionné précédemment, la Demanderesse a constaté que la cristallisation des polyesters comprenant un motif 1,4 : 3,6-dianhydrohexitol dans ces conditions usuelles de pressions aboutissait à l'expansion dudit polyester. Après de nombreuses recherches, la Demanderesse a cependant identifié des conditions particulières qui permettaient de limiter fortement, voire de s'affranchir complètement de ce phénomène.

Ainsi, selon le procédé de l'invention, l'étape de cristallisation du polyester comprenant un motif 1,4 : 3,6-dianhydrohexitol est réalisée sous une pression comprise dans la plage allant de 600 à 800 mbar absolus. Tout particulièrement, la cristallisation est réalisée sous une pression d'au moins 700 mbar absolus. A 800 mbar absolus de pression, le phénomène d'expansion du polyester est complètement supprimé.

Avantageusement, la suppression du phénomène d'expansion par l'intermédiaire des conditions de pression mises en oeuvre selon l'invention permet d'éviter la formation de granulés expansés de polyesters et de s'affranchir ainsi de l'obtention de sphères vides très fragiles qui se brisent sous agitation et provoquent ainsi la formation de fines particules non désirées.

De plus, le procédé selon l'invention permet un maintien homogène des morphologies des granulés qui évoluent ainsi à des vitesses similaires au cours par exemple d'une étape de post-condensation à l'état solide. Enfin, la suppression du phénomène d'expansion est avantageuse en ce que les granulés ne présentent pas d'agglomération accrue.

L'étape de cristallisation selon l'invention peut être réalisée en présence ou en absence d'un flux de gaz inerte, tel que par exemple un flux de diazote.

Selon un mode de réalisation particulièrement avantageux, cette étape est réalisée sans flux de gaz inerte allant ainsi à l'encontre de ce qui était connu pour le polynaphtalate d'éthylène afin de limiter le phénomène d'expansion. De plus, l'absence de flux de gaz pendant la cristallisation est avantageuse dans le cadre d'une étape ultérieure de post-condensation à l'état solide, car une telle étape est consommatrice de tels gaz. De cette manière, le procédé consomme moins de gaz lors de la mise en oeuvre d'une étape d'augmentation de la masse molaire du polyester.

Selon un mode de réalisation particulier, le procédé selon l'invention comprend également une étape de récupération du polyester cristallisé.

Le procédé selon l'invention comprend une étape de séchage du polyester comprenant un motif 1,4 : 3,6-dianhydrohexitol en amont de l'étape de cristallisation.

Cette étape est réalisée de manière à obtenir une teneur en eau du polyester inférieure à 0,1% et tout particulièrement inférieure à 0,05%. Le séchage du polyester permet avantageusement de contribuer à la diminution du phénomène d'expansion, notamment pour des pressions lors de l'étape de cristallisation comprises de 600 à 800 mbar absolus.

Selon un mode de réalisation particulier, le procédé selon l'invention comprend également une étape d'augmentation de masse molaire. Cette étape d'augmentation de masse molaire peut est réalisée par post-polymérisation du polyester. De préférence, la post-polymérisation est mise en oeuvre par une étape post-condensation à l'état solide (PCS).

La post-condensation à l'état solide est réalisée à une température comprise entre la température de transition vitreuse et la température de fusion du polymère. Ainsi, pour réaliser cette étape de PCS, il est nécessaire que le polyester soit semi-cristallin et cristallisé. La post-condensation étant une étape bien connue de l'homme du métier, ce dernier peut ajuster les conditions opératoires en fonction du polyester pour lequel il souhaite augmenter la masse molaire.

En conséquence, l'invention se rapporte aussi à un procédé d'augmentation de masse molaire d'un polyester semi-cristallin comprenant au moins un motif 1,4 : 3,6-dianhydrohexitol et comprenant les étapes suivantes de :
- fourniture d'un polyester semi-cristallin comprenant au moins un motif 1,4 : 3,6-dianhydrohexitol tel que défini précédemment,
- cristallisation dudit polyester,
- d'augmentation de masse molaire par post-condensation à l'état solide dudit polyester cristallisé,
ledit procédé étant caractérisé en ce que l'étape de cristallisation est réalisée à une pression comprise dans la plage allant de 600 à 800 mbar absolus et en ce qu'il comprend également une étape de séchage du polyester avant l'étape de cristallisation de manière à obtenir une teneur en eau du polyester inférieure à 0,1% et tout particulièrement inférieure à 0,05%.

Comme mentionné précédemment, l'étape de cristallisation est tout particulièrement réalisée sous une pression d'au moins 700 mbar absolus. A 800 mbar absolus de pression, le phénomène d'expansion du polyester est complètement supprimé.

De la même manière, le polyester fourni à la première étape peut être tel que défini précédemment.

Selon un mode de réalisation particulier, le procédé d'augmentation de masse molaire comprend une étape de récupération du polyester après augmentation de la masse molaire.

Ce procédé d'augmentation de masse molaire est particulièrement avantageux en ce qu'il permet d'obtenir des polyesters semi-cristallins présentant une masse molaire augmentée tout en limitant, voire en supprimant, le phénomène d'expansion dudit polyester pendant l'étape de cristallisation. Ainsi, le polyester récupéré en fin de procédé ne présente pas de sphères vides très fragiles qui se brisent sous agitation et qui provoquent ainsi la formation de fines particules non désirées. De même, en l'absence d'expansion, le polyester se présentant généralement sous la forme de granulés, possède une structure macroscopique homogène, ce qui permet d'obtenir des vitesses uniformes pendant l'étape de post-condensation et donc en fin de procédé, une homogénéité de la masse molaire dudit polyester.

L'invention est également décrite dans les exemples ci-après, lesquels se veulent purement illustratifs et ne limitent en rien la portée de la présente invention.

### Exemples

Dans tous les exemples, la formule « moles%/diols » fait référence au % molaire d'isosorbide par rapport aux diols.

La viscosité réduite en solution (ηred) est évaluée à l'aide d'un viscosimètre capillaire Ubbelohde à 35°C dans un mélange équimassique de phénol et d'ortho-dichlorobenzène après dissolution du polymère à 135°C sous agitation magnétique. Pour ces mesures, la concentration de polymère introduite est de 5g/L.
Taux d'expansion : rapport de la quantité de granulés de polyester expansés/quantité de polyester totale x 100.
Tg : Température de transition vitreuse
Tf : température de fusion

Pour les exemples illustratifs présentés ci-dessous les réactifs suivants ont été utilisés :
- Isosorbide (pureté >99,5%) Polysorb^{®} P - Roquette Frères
- 1 ,4-Cyclohexane diméthanol (pureté 99%, mélange d'isomères cis et trans)
- Acide téréphtalique (pureté 99+ %) - Accros
- Acétate de cobalt tétrahydrate (99,999 %) - Sigma Aldrich
- Ethylène glycol (pureté >99,8 %) - Sigma-Aldrich
- Anti-oxydant : Irganox 1010 - BASF SE
- Anti-oxydant : Hostanox P-EPQ - Clariant
- Irgamod 195 - BASF SE
- Additif de polymérisation limitant les réactions d'éthérification : Tetraéthylammonium hydroxyde en solution à 20 % en poids dans l'eau - Sigma Aldrich
- Dioxyde de germanium (>99,99 %) - Sigma Aldrich
- Oxyde de diméthyle étain -(99%) Sigma Aldrich
- Acétate de sodium (>99%) Sigma Aldrich

### Exemple 1 : Synthèse des polyesters

Dans cet exemple, quatre polyesters (1A, 1B, 1C et 1D) pour une mise en oeuvre selon l'invention et un polyester comparatif (1 E) ont été synthétisés.

### • Polyester 1A

Dans un réacteur de 100 L sont introduits 21,05 kg d'acide téréphtalique, 4,4 kg d'isosorbide et 15,7 kg de cyclohexanediméthanol. Ensuite, 12 g d'oxyde de diméthyle étain (catalyseur) et 17,4 g de l'Irgamod 195 sont également ajoutés à la pâte.

Le mélange réactionnel est ensuite chauffé progressivement à 250°C sous 5 bars absolus de pression et sous agitation constante. L'eau formée par estérification est éliminée en continu au cours la réaction. Le taux d'estérification étant estimé à partir de la masse de distillat collectée. Au bout de 4h30 d'estérification, la pression du réacteur est diminuée jusqu'à pression atmosphérique et la température est amenée à 260°C. Puis, la pression est réduite à 0,7 mbar absolus en 100 minutes selon une rampe logarithmique et la température amenée à 280°C. Après 100 minutes, le polymère est coulé dans un bac d'eau puis découpé sous forme de granulés cylindriques.

Les propriétés du polyester final sont les suivantes : ηred = 54,3 mL/g, Tg=112°C, Tf=259,6°C.

Le polyester présente également un taux d'isosorbide mesuré par RMN ¹H de 17,2 moles%/diols, une masse de 100 granulés = 1,98 g et une teneur en eau de 0,33 %.

### • Polyester 1B

Dans un réacteur de 100L sont introduits 21,05 kg d'acide téréphtalique, 6,4 kg d'isosorbide et 13,8 kg de cyclohexanedimethanol. Ensuite, 12 g d'oxyde de diméthyle étain (catalyseur) et 17,4 g de l'Irgamod 195 sont également ajoutés à la pâte.

Le mélange réactionnel est ensuite chauffé progressivement à 250°C sous 5 bars absolus de pression et sous agitation constante. L'eau formée par estérification est éliminée en continu au cours la réaction. Le taux d'estérification étant estimé à partir de la masse de distillat collectée. Au bout d'environ 5h d'estérification, la pression du réacteur est diminuée jusqu'à pression atmosphérique et la température est amenée à 260°C. Puis, la pression est réduite à 0,7 mbar absolus en 1h30 selon une rampe logarithmique et la température amenée à 280°C. Après 190 minutes, le polymère est coulé dans un bac d'eau puis découpé sous forme de granulés cylindriques.

Les propriétés du polyester final sont les suivantes : ηred = 51,8 mL/g, Tg=118°C.

Le polyester présente également un taux d'isosorbide mesuré par en RMN ¹H de 27,1 moles%/diols, une masse pour 100 granulés = 0,91 g, et une teneur en eau de 0,43 %.

### • Polyester 1C

Dans un réacteur de 100L sont introduits 29,0 kg d'acide téréphtalique, 2,2 kg d'isosorbide et 12,1 kg d'éthylène glycol. Ensuite, 10,5 g de dioxyde de germanium, 2,2 g d'acétate de cobalt, 17,7 g d'Hostanox PEPQ, 17,7 g d'Iragnox 1010 et 5,4 g de solution aqueuse (20 % en poids) d'hydroxyde de tetra-éthyl ammonium sont également ajoutés à la pâte.

Le mélange réactionnel est ensuite chauffé progressivement à 250°C sous 3 bars absolus de pression et sous agitation constante. L'eau formée par estérification est éliminée en continu au cours la réaction. Le taux d'estérification étant estimé à partir de la masse de distillat collectée. Au bout d'environ 3 h d'estérification, la pression du réacteur est diminuée jusqu'à pression atmosphérique en 15 min. Puis, la pression est réduite à 0,7 mbar absolus en 30 min selon une rampe logarithmique et la température amenée à 265°C. Après 100 minutes, le polymère est coulé dans un bac d'eau puis découpé sous forme de granulés cylindriques.

Les propriétés du polyester final sont les suivantes : ηred = 49.8 mL/g, Tg=87°C.

Le polyester présente également un taux d'isosorbide mesuré par en RMN ¹H de 6.2 moles%/diols, une masse pour 100 granulés = 1,31 g, et une teneur en eau = 0,40 %.

### • Polyester 1D

Dans un réacteur de 100L sont introduits 29,0 kg d'acide téréphtalique, 3,7 kg d'isosorbide et 11,4 Kg d'éthylène glycol. Ensuite, 11,6 g d'oxyde de germanium, 2,7 g d'acétate de cobalt, 17,7 g d'Hostanox PEPQ, 17,7g d'Iragnox 1010 et 6,2 g de solution aqueuse (20 % en poids) d'hydroxyde de tetra-éthyl ammonium sont également ajoutés à la pâte.

Le mélange réactionnel est ensuite chauffé progressivement à 250°C sous 3 bars absolus de pression et sous agitation constante. L'eau formée par estérification est éliminée en continu au cours la réaction. Le taux d'estérification étant estimé à partir de la masse de distillat collectée. Au bout d'environ 3h30 d'estérification, la pression du réacteur est diminuée jusqu'à pression atmosphérique en 15 min. Puis, la pression est réduite à 0,7 mbar absolus en 30min selon une rampe logarithmique et la température amenée à 265°C. Après 110 minutes, le polymère est coulé dans un bac d'eau puis découpé sous forme de granulés cylindriques.

Les propriétés du polyester final sont les suivantes : ηred = 47,7 mL/g, Tg=91 °C.

Le polyester présente également un taux d'isosorbide mesuré en RMN ¹H de 10,2 moles%/diols, une masse pour 100 granulés = 1,17 g, et une teneur en eau de 0,47 %.

### • Polyester 1E: polyester comparatif sans isosorbide

Dans un réacteur de 3L sont introduits 695 g d'acide téréphtalique et 337 g d'éthylène glycol. 0,2 g d'oxyde de germanium et 50 mg d'acétate de sodium sont également ajoutés à la pâte.

Le mélange réactionnel est ensuite chauffé progressivement à 270°C sous 6,6 bar absolus de pression et sous agitation constante. L'eau formée par estérification est éliminée en continu au cours la réaction. Le taux d'estérification étant estimé à partir de la masse de distillat collectée. Au bout d'environ 2h20 d'estérification, la pression du réacteur est diminuée jusqu'à pression atmosphérique en 20 min. Puis, la pression est réduite à 0,7 mbar absolus en 90 min selon une rampe logarithmique et la température amenée à 280°C. Après 50 minutes, le polymère est coulé dans un bac d'eau puis découpé sous forme de granulés cylindriques.

Les propriétés du polymère final sont les suivantes : ηred = 59,1 mL/g, Tg=78°C, Tf=242°C. Le polymère final présente également une masse pour 100 granulés = 1,1 g, et une teneur en eau de 0,34 %.

### Exemple 2 : Mise en évidence du phénomène d'expansion lors de la cristallisation.

Cet exemple a pour objectif de mettre en évidence et d'évaluer le phénomène d'expansion lors d'une étape de cristallisation d'un polyester contenant de l'isosorbide.

### Essai 1 :

75 g de granulés du polyester 1A ont été mis en rotation dans un ballon cannelé de 500 ml. Un vide d'environ 0,5 mbar absolus est appliqué puis le ballon est plongé un bain d'huile pour être chauffé dans un premier temps à 110°C pendant 15 minutes pour éliminer les éventuelles traces d'eau.

Les granulés sont ensuite chauffés à la température de cristallisation de 165°C avec une rampe de 5°C/min. La température de cristallisation est maintenue pendant 100 minutes pour s'assurer que la cristallisation est complète. Les granulés cristallisés sont finalement refroidis lentement avant d'être triés pour identification visuelle des granulés expansés.

Ces conditions expérimentales provoquent un taux d'expansion de 16 ± 2% et l'agglomération des granulés autour de ces éléments expansés. Il est à noter qu'une température du bain de 165°C correspond à une température de 160°C au contact de la paroi interne du ballon.

### Essai 2 :

Les mêmes conditions de l'essai 1 sont reproduites à partir de granulés de polyester **1B.** Seule la température de cristallisation est modifiée à 175°C afin de correspondre à la température optimale de cristallisation pour le taux d'isosorbide de ce polyester.

Ces conditions expérimentales provoquent un taux d'expansion de 100%.

### Essai 3 :

Les mêmes conditions de l'essai 1 sont reproduites à partir de granulés de polyester **1C.** Seule la température de cristallisation est modifiée à 165 °C afin de correspondre à la température optimale de cristallisation pour le taux d'isosorbide de ce polyester.

Ces conditions expérimentales provoquent un taux d'expansion de 80%.

### Essai 4 :

Les mêmes conditions de l'essai 1 sont reproduites à partir de granulés de polyester 1D. Seule la température de cristallisation est modifiée à 165 °C afin de correspondre à la température optimale de cristallisation pour le taux d'isosorbide de ce polyester.

Ces conditions expérimentales provoquent un taux d'expansion de 80%.

### Essai 5 comparatif :

Les mêmes conditions de l'essai 1 sont reproduites à partir de granulés de polyester 1E qui ne contient pas d'isosorbide.

Sous vide poussé, la cristallisation du polyéthylène téréphtalate n'aboutit pas à l'expansion des granulés.

Les différents essais réalisés démontrent que le phénomène d'expansion est lié à la présence des motifs d'isosorbide dans les polyesters.

### Exemple 3 : Limitation du phénomène d'expansion

L'essai 1 est reproduit avec différentes valeurs de pression. Ainsi, à partir des granulés du polyester 1A, différentes conditions de vides ont été appliquées lors de la cristallisation.

Les résultats sont présentés dans le tableau 1 ci-dessous :

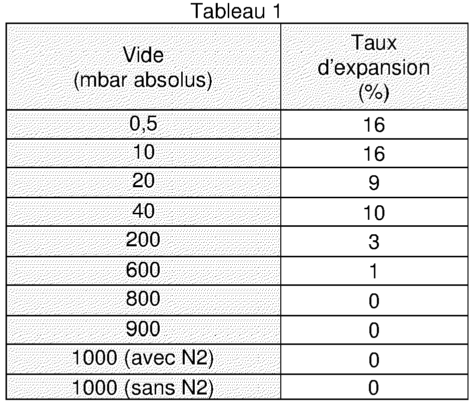

A partir de 600 mbar absolus de pression, le taux d'expansion obtenu après cristallisation diminue fortement. Le taux d'expansion est nul lorsque la pression est d'au moins 800 mbar absolus.

Cet exemple démontre ainsi que les conditions selon l'invention permettent de diminuer, voire de complètement supprimer le phénomène d'expansion de polyester contenant de l'isosorbide lors de l'étape de cristallisation.

### Exemple 4 : Validation des résultats avec d'autres polyesters

Les essais 2, 3 et 4 sont reproduits avec différentes valeurs de pression afin de confirmer les résultats obtenus avec le polyester 1A dans l'exemple précédent.

Les résultats sont présentés dans le tableau 2 ci-dessous :

| Tableau 2 | | | | |
|---|---|---|---|---|
| | Taux d'expansion (%) | | | |
| Vide (mbar absolus) | Polyester 1B | Polyester 1C | Polyester 1 D | Polyester 1E comparatif |
| 0,5 | 100 | 78 | 84 | 0 |
| 800 | 0 | 0 | 0 | 0 |
| 1000 (sans N2) | 0 | 0 | 0 | 0 |
| 1000 (avec N2) | 0 | 0 | 0 | 0 |

Les résultats montrent qu'une pression de 800 mbar absolus pendant la cristallisation permet d'éliminer le phénomène d'expansion dans les polyesters 1B, 1C et 1D présentant respectivement un % molaire d'isosorbide par rapport aux diols de 27,1 %, 6,2 % et 10,2 %.

Cet exemple confirme que les conditions de pression selon l'invention permettent de supprimer le phénomène d'expansion dans les polyesters contenant de l'isosorbide.

### Exemple 5 : Impact de la teneur en eau sur le phénomène d'expansion

L'essai 1 est reproduit en faisant varier la teneur en eau du polyester 1A. La matière est soit immergée dans de l'eau pendant 72h ou 160h, soit séchée à 110°C en étuve aérée. Après cristallisation le taux d'expansion est évalué. Les résultats sont présentés par le tableau 3.

**Tableau 3**

| | Teneur en eau (%) | Taux d'expansion (%) |
|---|---|---|
| Matière immergée 160h | 0,63 | 41 |
| Matière immergée 72h | 0,42 | 27 |
| Matière non modifiée | 0,33 | 16 |
| Matière séchée 72h à 110°C | 0,03 | 2 |
| Matière séchée 144h à 110°C | 0,02 | 1,5 |

Les résultats montrent que le phénomène d'expansion dépend également de la teneur en eau du polyester, et qu'il est considérablement réduit lorsque la matière est séchée.

Ce comportement a également été confirmé à partir de l'essai 2 en faisant varier la teneur en eau du polyester 1B. Les résultats montrent que la cristallisation du polyester 1B présentant une teneur en eau de 0,43% aboutit à un taux d'expansion de 100%, alors qu'un séchage de manière à obtenir une teneur en eau de 0,04% permet de réduire le taux d'expansion à 8% lors de la cristallisation.

## Revendications

1. Procédé de cristallisation d'un polyester comprenant au moins un motif 1,4 : 3,6-dianhydrohexitol, et comprenant les étapes suivantes de :
- fourniture d'un polyester semi-cristallin comprenant au moins un motif 1,4 : 3,6-dianhydrohexitol,
- cristallisation dudit polyester,
ledit procédé étant **caractérisé en ce que** l'étape de cristallisation est réalisée à une pression comprise dans la plage allant de 600 à 800 mbar absolus et **en ce qu'**il comprend également une étape de séchage du polyester avant l'étape de cristallisation de manière à obtenir une teneur en eau du polyester inférieure à 0,1%.

2. Procédé selon la revendication 1, **caractérisé en ce que** le motif 1,4 : 3,6-dianhydrohexitol est l'isosorbide.

3. Procédé selon la revendication 1 ou 2, **caractérisé en ce que** le polyester fourni est un polyester semi-cristallin thermoplastique comprenant :
- au moins un motif 1,4 : 3,6-dianhydrohexitol (A),
- au moins un motif diol (B), autre que le motif 1,4 : 3,6-dianhydrohexitol (A),
- au moins un motif acide dicarboxylique aromatique (C).

4. Procédé selon la revendication 3, **caractérisé en ce que** le motif diol (B) dudit polyester, autre que le motif 1,4 : 3,6-dianhydrohexitol (A), est un motif diol alicyclique choisi dans le groupe comprenant le 1,4-cyclohexanedimethanol, le 1,2-cyclohexanedimethanol, le 1,3-cyclohexanedimethanol, le spiroglycol, le tricyclo[5.2.1.0^{2,6}]décane diméthanol (TCDDM), le 2,2,4,4-tétraméthyl-1,3-cyclobutandiol, le tétrahydrofuranedimethanol (THFDM), le furanediméthanol, le 1,2-cyclopentanediol, le 1,3-cyclopentanediol, le 1,2-cyclohexanediol, le dioxane glycol (DOG), les norbornane diols, les adamanthanediols, les pentacyclopentadecane diméthanols ou un mélange de ces diols, de préférence le 1,4-cyclohexanedimethanol, .

5. Procédé selon la revendication 3 ou 4, **caractérisé en ce que** le motif diol (B) dudit polyester, autre que le motif 1,4 : 3,6-dianhydrohexitol (A), est un diol aliphatique non cyclique linéaire saturé choisi dans le groupe comprenant l'éthylène glycol, le 1,3-propanediol, le 1,4-butanediol, le 1,5-pentanediol, le 1,6-hexanediol, le 1,8-octanediol et/ou le 1,10-decanediol, de préférence l'éthylène glycol.

6. Procédé selon l'une des revendications 3 à 5 , **caractérisé en ce que** le motif (C) dudit polyester est choisi dans le groupe comprenant les dérivés des naphtalates, téréphtalates, furanoates, thiophène dicarboxylate, pyridine dicarboxyalte, d'isophtalates ou leurs mélanges.

7. Procédé selon l'une des revendications 1 à 6, **caractérisé en ce qu'**il comprend également une étape de séchage du polyester avant l'étape de cristallisation de manière à obtenir une teneur en eau du polyester inférieure à 0,05%.

8. Procédé selon l'une des revendications 1 à 7, **caractérisé en ce qu'**il comprend également une étape d'augmentation de masse molaire dudit polyester après l'étape de cristallisation.

9. Procédé selon la revendication 8, **caractérisé en ce que** l'augmentation de masse molaire dudit polyester est réalisée par post-condensation à l'état solide (PCS).

10. Procédé d'augmentation de masse molaire d'un polyester comprenant au moins un motif 1,4 : 3,6-dianhydrohexitol et comprenant les étapes suivantes de :
- fourniture d'un polyester semi-cristallin comprenant au moins un motif 1,4 : 3,6-dianhydrohexitol,
- cristallisation dudit polyester,
- d'augmentation de masse molaire par post-condensation à l'état solide dudit polyester cristallisé.
ledit procédé étant **caractérisé en ce que** l'étape de cristallisation est réalisée à une pression comprise dans la plage allant de 600 à 800 mbar absolus et **en ce qu'**il comprend également une étape de séchage du polyester avant l'étape de cristallisation de manière à obtenir une teneur en eau du polyester inférieure à 0,1% et tout particulièrement inférieure à 0,05%.

## Patentansprüche

1. Verfahren zur Kristallisation eines Polyesters, der wenigstens eine 1,4:3,6-Dianhydrohexitol-Einheit umfasst, und die folgenden Schritte umfasst:
- Bereitstellung eines semikristallinen Polyesters, der wenigstens eine 1,4:3,6-Dianhydrohexitol-Einheit umfasst,
- Kristallisation des Polyesters,
wobei das Verfahren **dadurch gekennzeichnet ist, dass** der Kristallisationsschritt bei einem Druck im Bereich von 600 bis 800 mbar absolut durchgeführt wird und dass es auch einen Schritt des Trocknens des Polyesters vor dem Kristallisationsschritt umfasst, so dass ein Wassergehalt des Polyesters von weniger als 0,1 % erhalten wird.

2. Verfahren nach Anspruch 1, **dadurch gekennzeichnet, dass** die 1,4:3,6-Dianhydrohexitol-Einheit Isosorbid ist.

3. Verfahren nach Anspruch 1 oder 2, **dadurch gekennzeichnet, dass** der bereitgestellte Polyester ein thermoplastischer semikristalliner Polyester ist, umfassend:
- wenigstens eine 1,4:3,6-Dianhydrohexitol-Einheit (A),
- wenigstens eine Diol-Einheit (B), die von der 1,4:3,6-Dianhydrohexitol-Einheit (A) verschieden ist,
- wenigstens eine aromatische Dicarbonsäure-Einheit (C).

4. Verfahren nach Anspruch 3, **dadurch gekennzeichnet, dass** die von der 1,4:3,6-Dianhydrohexitol-Einheit (A) verschiedene Diol-Einheit (B) des Polyesters eine alicyclische Diol-Einheit ist, gewählt aus der Gruppe, umfassend 1,4-Cyclohexandimethanol, 1,2-Cyclohexandimethanol, 1,3-Cyclohexandimethanol, Spiroglycol, Tricyclo[5.2.1.0^{2,6}]decan-dimethanol (TCDDM), 2,2,4,4-Tetramethyl-1,3-cyclobutandiol, Tetrahydrofurandimethanol (THFDM), Furandimethanol, 1,2-Cyclopentandiol, 1,3-Cyclopentandiol, 1, 2-Cyclohexandiol, Dioxanglykol (DOG), Norbornandiole, Adamanthandiole, Pentacyclopentadecandimethanole oder ein Gemisch dieser Diole, bevorzugt 1,4-Cyclohexandimethanol.

5. Verfahren nach Anspruch 3 oder 4, **dadurch gekennzeichnet, dass** die von 1,4:3,6-Dianhydrohexitol (A) verschiedene Diol-Einheit (B) des Polyesters ein gesättigtes lineares nichtzyklisches aliphatisches Diol ist, gewählt aus der Gruppe, umfassend Ethylenglycol, 1,3-Propandiol, 1,4-Butandiol, 1,5-Pentandiol, 1,6-Hexandiol, 1,8-Octandiol und/oder 1,10-Decandiol, bevorzugt Ethylenglycol.

6. Verfahren nach einem der Ansprüche 3 bis 5 , **dadurch gekennzeichnet, dass** die Einheit (C) des Polyesters gewählt ist aus der Gruppe, umfassend Derivate von Naphthalaten, Terephthalaten, Furanoaten, Thiophendicarboxylat, Pyridindicarboxylat, Isophthalaten oder deren Mischungen.

7. Verfahren nach einem der Ansprüche 1 bis 6, **dadurch gekennzeichnet, dass** es auch einen Schritt des Trocknens des Polyesters vor dem Kristallisationsschritt umfasst, so dass ein Wassergehalt des Polyesters von weniger als 0,05 % erhalten wird.

8. Verfahren nach einem der Ansprüche 1 bis 7, **dadurch gekennzeichnet, dass** es auch einen Schritt der Erhöhung der Molmasse des Polyesters nach dem Kristallisationsschritt umfasst.

9. Verfahren nach Anspruch 8, **dadurch gekennzeichnet, dass** die Erhöhung der Molmasse des Polyesters durch Nachkondensation im festen Zustand (PCS) durchgeführt wird.

10. Verfahren der Erhöhung der Molmasse eines Polyesters, der wenigstens eine 1,4:3,6-Dianhydrohexitol-Einheit umfasst und die folgenden Schritte umfasst:
- Bereitstellung eines semikristallinen Polyesters, der wenigstens eine 1,4:3,6-Dianhydrohexitol-Einheit umfasst,
- Kristallisation des genannten Polyesters,
- Erhöhung der Molmasse durch Nachkondensation im festen Zustand des kristallisierten Polyesters,
wobei das Verfahren **dadurch gekennzeichnet ist, dass** der Kristallisationsschritt bei einem Druck im Bereich von 600 bis 800 mbar absolut durchgeführt wird und dass es auch einen Schritt des Trocknens des Polyesters vor dem Kristallisationsschritt umfasst, um einen Wassergehalt des Polyesters von weniger als 0,1 % und insbesondere weniger als 0,05 % zu erhalten.

## Claims

1. A method for crystallizing a polyester comprising at least one 1,4:3,6-dianhydrohexitol unit, and comprising the following steps of:
- providing a semi-crystalline polyester comprising at least one 1,4:3,6-dianhydrohexitol unit,
- crystallizing said polyester,
said method being **characterized in that** the crystallization step is performed at a pressure comprised in a range from 600 to 800 mbar absolute and **in that** it further comprises a step of drying the polyester upstream of the crystallization step so as to obtain a water content in the polyester of less than 0.1%.

2. The method according to claim 1, **characterized in that** the 1,4:3,6-dianhydrohexitol unit is isosorbide.

3. The method according to one of claims 1 or 2, **characterized in that** the polyester provided is a semi-crystalline thermoplastic polyester comprising:
- at least one 1,4:3,6-dianhydrohexitol unit (A),
- at least one diol unit (B), other than the 1,4:3,6-dianhydrohexitol unit (A),
- at least one aromatic dicarboxylic acid unit (C).

4. The method according to claim 3, **characterized in that** the diol unit (B) of said polyester, other than the 1,4:3,6-dianhydrohexitol unit (A), is an alicyclic diol unit selected from the group comprising 1,4-cyclohexanedimethanol, 1,2-cyclohexanedimethanol, 1,3-cyclohexanedimethanol, spiroglycol, tricyclo[5.2.1.0^{2,6}]decanedimethanol (TCDDM), 2,2,4,4-tetramethyl-1,3-cyclobutanediol, tetrahydrofurandimethanol (THFDM), furandimethanol, 1,2-cyclopentanediol, 1,3-cyclopentanediol, 1,2-cyclohexanediol, dioxane glycol (DOG), norbornane diols, adamanthane diols, pentacyclopentadecane dimethanols or a mixture of these diols, preferably 1,4-cyclohexanedimethanol.

5. The method according to claim 3 or 4, **characterized in that** the diol unit (B) of said polyester, other than the 1,4:3,6-dianhydrohexitol unit (A), is a saturated linear non-cyclic aliphatic diol selected from the group comprising ethylene glycol, 1,3-propanediol, 1,4-butanediol, 1,5-pentanediol, 1,6-hexanediol, 1,8-octanediol and/or 1,10-decanediol, preferably ethylene glycol.

6. The method according to one of claims 3 to 5, **characterized in that** the unit (C) of said polyester is selected from the group comprising derivatives of naphthalates, terephthalates, furanoates, thiophene dicarboxylate, pyridine dicarboxylate, isophthalates, or mixtures thereof.

7. The method according to one of claims 1 to 6, **characterized in that** it further comprises a step of drying the polyester upstream of the crystallization step so as to obtain a water content in the polyester of less than 0.05%.

8. The method according to one of claims 1 to 7, **characterized in that** it also comprises a step of increasing the molar mass of said polyester after the crystallization step.

9. The method according to claim 8, **characterized in that** the molar mass of said polyester is increased by solid-state post-condensation (SSP).

10. A method for increasing the molar mass of a polyester comprising at least one 1,4:3,6-dianhydrohexitol unit, and comprising the following steps of:
- providing a semi-crystalline polyester comprising at least one 1,4:3,6-dianhydrohexitol unit,
- crystallizing said polyester,
- increasing the molar mass of said crystallized polyester by solid-state post-condensation.
said method being **characterized in that** the crystallization step is performed at a pressure comprised in a range from 600 to 800 mbar absolute and **in that** it further comprises a step of drying the polyester upstream of the crystallization step so as to obtain a water content in the polyester of less than 0.1%, preferably less than 0.05%.
